# EUROPÄISCHE PATENTSCHRIFT

(11) **EP 1 844 988 B1**
(45) Veröffentlichungstag und Bekanntmachung des Hinweises auf die Patenterteilung: **03.11.2010**
(21) Anmeldenummer: 07102151.3
(22) Anmeldetag: 12.02.2007
(51) Int. Cl.: B60R 21/01

(54) **System und Verfahren zur Ansteuerung von Personenschutzmitteln**
System and method for controlling occupant restraint devices
Système et procédé destinés à la commande de moyens de protection des occupants

(30) Priorität: 12.04.2006 DE 102006017179
(43) Veröffentlichungstag der Anmeldung: 17.10.2007
(73) Patentinhaber: ROBERT BOSCH GMBH, 70442 Stuttgart (DE)
(72) Erfinder: Rank, Thomas, 71636, Ludwigsburg (DE); Petkof, Wilhelm, 73249, Wernau (DE); Angstmann, Karsten, 70197, Stuttgart (DE); Breu, Andreas, 71665, Vaihingen-Enzweihingen (DE)

(56) Entgegenhaltungen:
- EP-A2- 0 691 244
- WO-A-01/94158
- DE-A1- 3 639 065
- DE-A1- 4 425 254
- US-A1- 2004 158 376

## Beschreibung

### Stand der Technik

Die Erfindung betrifft eine Vorrichtung bzw. ein Verfahren zur Ansteuerung von Personenschutzmitteln nach der Gattung der unabhängigen Patentansprüche.

Aus EP 0 482 015 B1 ist eine Anordnung bekannt, die zur Ansteuerung von Personenschutzmitteln dient. Dabei wird von einer Recheneinheit in Abhängigkeit von einem Sensorsignal eine Auslöseentscheidung getroffen. Um festzustellen, ob die Recheneinheit nicht gestört ist, werden aber die Zündendstufen verriegelt, um noch einen diesbezüglichen Test durchzuführen, ob die Recheneinheit die Entscheidung korrekt durchgeführt hat. Ist die Funktionsweise der Recheneinheit korrekt, dann werden die Zündendstufen freigegeben und die Auslöseentscheidung führt zur Bestromung des Zündelements.

Aus DE 44 25 245 A1 ist eine Vorrichtung aus einer Steuereinheit einer Datenleitung in eine Funktionseinheit bekannt, wobei die Funktionseinheit eine Zündkreisschaltung sein kann. Diese Funktionseinheit weist einen Arbeits- bzw. Pufferspeicher auf. Eine Ansteuerungsentscheidung wird in diesen Pufferspeicher zwischengespeichert, um sie dann an die Steuereinheit zurück zu übertragen, die einen Datenintegritätstest durchführt. In Abhängigkeit davon wird die Entscheidung noch einmal übertragen. Aus DE 36 39 065 A1 ist es bekannt, eine Vorrichtung zu schaffen, die fehlerhafte Stellgrößen rechtzeitig erkennt und eine entsprechende Ansteuerung unterbindet. Dazu werden die Steuersignale, die von einem Rechner erzeugt werden, von einer Auswerteschaltung geprüft. Nur wenn die Prüfung erfolgreich war, können die Steuersignale an ein Stellglied weitergegeben werden. Die Prüfung kann eine völlig redundante Auswertung parallel zum Rechner sein, sie kann die Bestimmung von Zwischenergebnissen sein oder bestimmte Prüfwerte werden untersucht. Aus US 2004/015 8376 A1 ist ein zentraler Controller bekannt, der mehrere Sensormodule aufweist, die Plausibilitätsflaggen bzw. Vorheranforderungen ausgeben können. Aus WO 01/94158 A1 ist ein Halteglied für eine Vorherentscheidung bekannt. Aus TMS470Rlx Multi-Buffer Serial Peripherial Interface Reference Guide, Literature Number: SPNU217B, Oktober 2003, Texas Instruments, Dallas, Texas (US), Seiten 1-2 ist ein Multi-Buffer SPI bekannt.

### Offenbarung der Erfindung

Die erfindungsgemäße Vorrichtung bzw. das erfindungsgemäße Verfahren zur Ansteuerung von Personenschutzmitteln mit den Merkmalen der unabhängigen Patentansprüche haben demgegenüber Vorteile. Es ist bekannt, dass die Auslöseentscheidung nicht schon direkt am Zündkreis anliegt, sondern vorteilhafterweise zwischengespeichert wird und dann unabhängig von der Auswerteschaltung, also beispielsweise dem Rechnerkern eines Mikrocontrollers, zum Zündkreis übertragen wird. Die Unterdrückung der Feuerentscheidung kann dabei an verschiedenen Punkten in der Vorrichtung erfolgen: Es ist möglich, die Feuerentscheidung nicht zu übertragen. Es ist möglich die Zündendstufen zu sperren und es ist möglich, ein allgmeines Reset durchzuführen. Weitere Alternativen sind möglich.

Damit ist einerseits eine hohe Sicherheit erreicht und andererseits wird Rechenzeit durch die Parallelisierung der Berechnung und der Übertragung eingespart. Das heißt, die dem Speicher zugeordnete Logikschaltung trifft unabhängig von der Auswerteschaltung, beispielsweise dem Rechnerkern die Übertragungsentscheidung, um die Auslöseentscheidung zum Zündkreis zu übertragen. Auch führt die vom Rechnerkern getrennte Übertragung der Feuerentscheidung dazu, dass die Feuerzeiten deutlich konstanter sind, insbesondere wenn eine zyklische Arbeitsweise der erfindungsgemäßen Vorrichtung bzw. des erfindungsgemäßen Verfahrens vorliegt. Während der Übertragung ist die Auswerteschaltung für andere Aufgaben frei, zum Beispiel um eine Entscheidung zur Ansteuerung von weiteren Personenschutzmitteln zu bilden. Die Auswerteschaltung, wie zum Beispiel ein Rechnerkern, führt demnach die Übertragung der Feuerentscheidung nicht durch.

Das erfindungsgemäße Verfahren bzw. die erfindungsgemäße Vorrichtung führen zu einer Verbesserung der Absicherung gegen Fehlauslösungen. Dies wird erreicht, indem das Erzeugen einer Feuerentscheidung von deren Übertragung an die Zündendstufen getrennt wird. Dies ermöglicht dann vor der Übertragung eine weitere Überprüfung der Auswerteschaltung bzw. des Rechnerkerns, mittels eines Watchdogs durchzuführen. Doch auch wenn die Übertragung erfolgt ist, kann durch eine direkte Ansteuerung der Zündendstufen durch den Watchdog eine Auslösung der Personenschutzmittel noch unterdrückt werden.

Erfindungskennzeichnend ist, dass die Überprüfung durch einen Watchdog durchgeführt wird, der der Auswerteschaltung eine Frage sendet, auf die die Auswerteschaltung dann mit einer entsprechenden Antwort antworten muss, um zu einer positiven Überprüfung zu gelangen. Dabei sollen die arithmetischen Funktionen und Sprungbefehle in der Auswerteschaltung getestet werden.

Durch die in den abhängigen Ansprüchen aufgeführten Maßnahmen und Weiterbildungen sind vorteilhafte Verbesserungen der in den unabhängigen Patentansprüchen angegebenen Vorrichtung bzw. des in den unabhängigen Patentansprüchen angegebenen Verfahrens zur Ansteuerung von Personenschutzmitteln möglich.

Führt die Überprüfung zu einem negativen Ergebnis, dann kann der Watchdog ein Reset der Auswerteschaltung durchführen und/oder eine Sperrung von sicherheitskritischen Anwendungen durchführen. Erfindungsgemäß ist vorgesehen, dass, bei einer Überprüfung mit negativem Ergebnis, die Übertragung aus dem Speicher, veranlasst durch die Logikschaltung, gestoppt wird. Allgemein gesagt, die Feuerentscheidung wird unterdrückt.

Es ist weiter von Vorteil, dass die Vorrichtung, wie oben angegeben, in Zyklen arbeitet und die Überprüfung (Frage/Antwort) zu Beginn des Zyklus erfolgt, wobei die Antwort auch am Ende des Zyklus oder zu Beginn des nächsten Zyklus erfolgen kann.

Vorteilhafterweise ist der Speicher als ein so genannter multi-buffered SPI (Serial Peripheral Interface) ausgebildet. Die MibSPI ist integrierter Teil des Mikrocontrollers, der allerdings parallel zum µC-Core, das ist der Rechnerkern, also die Auswerteschaltung parallel abläuft. Zu diesem Zweck verfügt der Mikrocontroller über eine Reihe von Puffern (sowohl Sende- wie auch Empfangspuffer). Die Sendepuffer werden zu einem bestimmten Zeitpunkt mit den zu übertragenden Werten initialisiert. Die eigentliche Übertragung findet erst später, nach einem expliziten Antriggern, statt. Die Übertragung selbst erfolgt dann eigenständig durch das MibSpi-Modul, ohne direkte Kontrolle durch den µC-Kern. Die Antwortnachrichten aus dieser Kommunikation werden in dem Empfangsbuffern gespeichert, um von dort zu einem späteren Zeitpunkt durch den µC-Kern ausgelesen zu werden. Insgesamt ist die eigentliche Übertragung also getrennt von Rechenoperationen / Logik, findet aber im selben Chip statt.

Ausführungsbeispiele der Erfindung sind in der Zeichnung dargestellt und werden in der nachfolgenden Beschreibung näher erläutert.

Es zeigen
- Figur 1: ein Blockschaltbild der erfindungsgemäßen Vorrichtung,
- Figur 2: ein erstes Flussdiagramm,
- Figur 3: ein zweites Flussdiagramm und
- Figur 4: ein Zeitablaufdiagramm.

Eine Auswerteschaltung wie ein Rechnerkern eines Mikrocontrollers kann bei einer Fehlfunktion unbeabsichtigt eine Auslöseentscheidung treffen. Dies muss unbedingt verhindert werden. Dafür sind bereits mehrere Möglichkeiten bekannt. Neben der aus dem Stand der Technik angegebenen Möglichkeit weisen Airbagsteuergeräte zusätzlich eine redundante Auswertung, entweder über einen mechanischen Beschleunigungsschalter oder einen elektronischen Sicherheitsschalter, auf. Damit ist gewährleistet, dass bei einer Fehlfunktion des Mikrocontrollers die redundante Auswertung eine Fehlauslösung verhindert.

Erfindungsgemäß wird jedoch vorgeschlagen, die Auslöseentscheidung der Auswerteschaltung in einen Speicher zu schreiben, wobei die Auswerteschaltung die Kommunikation der Auslöseentscheidung zu den Zündendstufen nicht durchführt, sondern dies wird mittels einer Logikschaltung, insbesondere durch einen so genannten multi-buffered SPI durchgeführt, also getrennt von der Auswerteschaltung, beispielsweise des Rechnerkerns eines Mikrocontrollers. Dies ermöglicht, vor der Übertragung der Auslöseentscheidung an die Zündendstufen, nochmals eine Überprüfung des Rechnerkerns durchzuführen. Dafür wird ein Watchdog verwendet, der dem Rechnerkern eine Frage sendet, auf die der Rechnerkern eine entsprechende Antwort senden muss, um seine korrekte Funktionsweise nachzuweisen. Hierbei werden die arithmetischen Fähigkeiten des Rechnerkerns und beispielsweise auch die korrekte Funktionsweise von Sprungbefehlen geprüft. Wird die korrekte Funktionsweise nicht nachgewiesen, dann sperrt beispielsweise der Watchdog die Übertragung der Auslöseentscheidung an die Zündendstufen über ein entsprechendes Signal an die Logikschaltung, die die Kommunikation aus dem Speicher zu den Zündendstufen veranlasst. Auch die Logikschaltung und der Speicher sind neben dem Rechnerkern in einem Ausführungsbeispiel Elemente des Mikrocontrollers, also sind diese Elemente alle auf einem Chip.

Dann kann noch

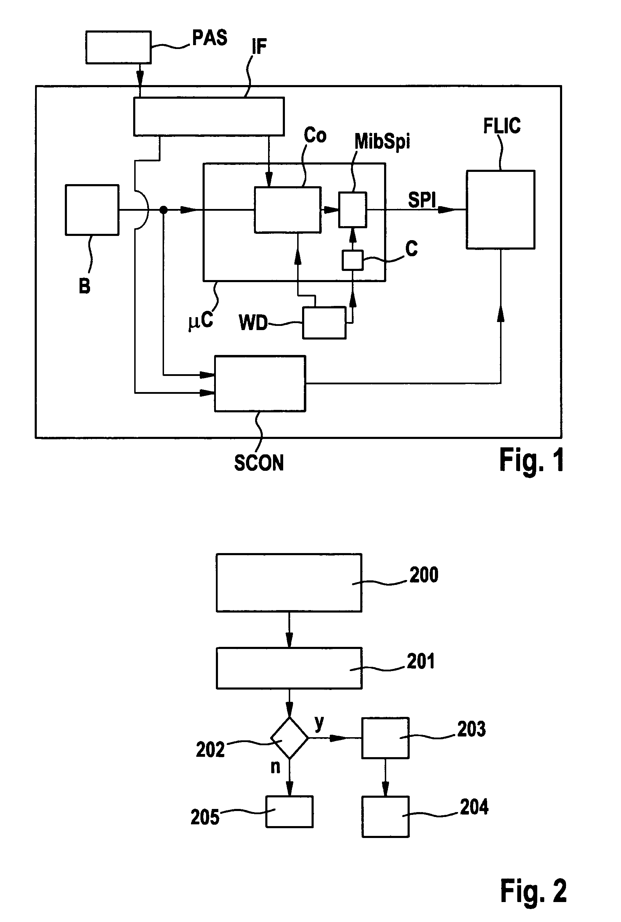

Figur 1 zeigt in einem Blockschaltbild die erfindungsgemäße Vorrichtung. In einem Steuergerät SG zur Ansteuerung von Personenschutzmitteln sind lediglich die relevanten Bausteine dargestellt, andere, zur Funktion des Steuergeräts notwendigen Bausteine, sind der Einfachheit halber hier weggelassen worden. Diese Bausteine sind dem Fachmann aus seinem Fachwissen jedoch bekannt.

Im Steuergerät SG befindet sich eine Beschleunigungssensorik B, die einmal an einen Mikrocontroller µC angeschlossen ist und zum anderen an einen Sicherheitshalbleiter bzw. Sicherheitsschalter SCON. Sowohl der Mikrocontroller µC als auch der Sicherheitsschalter SCON werten das Beschleunigungssignal durch Schwellwertvergleiche aus. Zur Auswertung weist der Mikrocontroller einen Rechnerkern Co als Auswerteschaltung auf.

Der Auslösealgorithmus, der auf dem Rechnerkern Co läuft, ist jedoch weit komplexer als die Auswertung, die der Sicherheitsschalter SCON durchführt. Der Sicherheitsschalter SCON ist lediglich zur Plausibilisierung der Auslöseentscheidung des Rechnerkerns Co vorgesehen. Vorliegend erhalten der Rechnerkern Co und der Sicherheitsschalter SCON jedoch auch von einer externen Beschleunigungssensorik PAS über einen Schnittstellenbaustein IF Signale von dieser Sensorik, die auch mit ausgewertet werden und zwar vom Rechnerkern Co und vom Sicherheitsschalter SCON. Der Interfacebaustein IF weist beispielsweise eine Logik auf, um die Daten von der externen Beschleunigungssensorik PAS in ein für die Steuergerät-interne Datenübertragung geeignetes Format umzuwandeln. Auch eine Speicherung der Daten im Interfacebaustein IF ist möglich. Die Beschleunigungssensordaten werden vorzugsweise im Steuergerät SG über den SPI-Bus übertragen. Es ist möglich, den Schnittstellenbaustein in den Mikrocontroller µC zu integrieren.

Der Sicherheitsschalter SCON ist über ein Ausgangssignal direkt oder indirekt mit der Zündkreisschaltung FLIC, die die Endstufen beinhaltet, verbunden. Der Sicherheitsschalter SCON gibt die Zündendstufen frei, wenn der Sicherheitsschalter SCON genügend hohe Beschleunigungssignale erkennt. Der Rechnerkern Co überträgt seine durch den Auslösealgorithmus gebildete Auslöseentscheidung in einen Speicher MibSpi. Dieser Speicher MibSpi wird von einer Logikschaltung C kontrolliert. Die Logikschaltung C veranlasst die Übertragung von Daten aus dem Speicher MibSpi über die SPI-Leitung an die Zündendstufen FLIC. Die Logikschaltung C ist dabei ein Schaltwerk, das nach vorgegebenen Zeiten die Auslöseentscheidung überträgt, also beispielsweise immer im nächsten Zyklus. Der Speicher MibSpi und die Logikschaltung C sind ebenfalls wie der Rechnerkern Co Elemente des Mikrocontrollers µC, der daneben noch andere Elemente aufweist.

Die Logikschaltung C wird jedoch über einen Watchdog WD beeinflusst werden. Der Watchdog WD ist über einen Datenein-/-ausgang mit dem Rechnerkern Co verbunden, um den Rechnerkern Co in seiner Funktion zu überprüfen. Dazu überträgt der Watchdog WD, beispielsweise zu Beginn eines jeden Zyklus, eine Frage, auf die der Rechnerkern Co in einer bestimmten Weise antworten muss, um seine korrekte Funktion nachzuweisen. Gelingt dies nicht, dann beeinflusst der Watchdog WD über eine Datenleitung die Logikschaltung C derart, dass diese eine Übertragung einer Auslöseentscheidung aus dem Speicher MibSpi zur Zündkreisschaltung FLIC verhindert. Es erfolgt mithin eine Sperrung der Übertragung. Bei dem Watchdog WD handelt es sich beispielsweise um einen einfachen Rechner oder ein Schaltwerk, das derart konfiguriert ist, dass es die oben beschriebenen Funktionen ausführen kann. Der Watchdog WD ist vorliegend ein eigenständiges Bauelement. Es ist möglich, dass der Watchdog in den Sicherheitshalbleiter SCON oder den Mikrocontroller µC integriert ist.

Es ist möglich, dass sich alternativ die Beschleunigungssensorik B komplett außerhalb des Steuergeräts SG komplett befindet. Dies ermöglicht, das Steuergerät SG unabhängig von Überlegungen für die Erfassung von Beschleunigungssignalen anzuordnen. D.h. das Steuergerät muss nicht auf dem Fahrzeugtunnel angeordnet werden. Die Beschleunigugnssensorik kann dabei beispielsweise in einer Sensorbox auf dem Tunnel angeordnet sein. Es ist weiterhin möglich, nur die externe Beschleunigungssensorik PAS zu verwenden. Diese Beschleunigungssensorik kann auch in mehreren Raumrichtungen beschleunigungsempfindlich sein.

Auch die Zündendstufen FLIC können sich außerhalb des Steuergeräts SG befinden. Anstatt von Beschleunigungssignalen können auch andere Sensorsignale, wie beispielsweise ein Drucksignal, zur Bildung der Auslöseentscheidung herangezogen werden. Auch Signale von Umfeldsensoren können hierbei berücksichtigt werden. Weiterhin können auch Signale von Fahrdynamiksensoren berücksichtigt werden. Als Personenschutzmittel werden Airbags, Gurtstraffer, aktive Sitze und andere bekannte Personenschutzmittel angesteuert.

Figur 2 zeigt in einem Flussdiagramm den Ablauf des erfindungsgemäßen Verfahrens. In Verfahrensschritt 200 wird, wie oben dargestellt, die Feuerentscheidung durch den Rechnerkern Co als Auswerteschaltung in Abhängigkeit von den Sensorsignalen gebildet.

Im Verfahrensschritt 201 wird diese Feuerentscheidung durch den Rechnerkern Co in den Speicher MibSpi geschrieben.

In Verfahrensschritt 202 wird nun die Überwachung des Rechnerkerns Co durch den Watchdog WD durchgeführt. Führt diese Überwachung zu einem positiven Ergebnis, dann wird in Verfahrensschritt 203 die Übertragung der Feuerentscheidung an die Zündkreisschaltung FLIC durch die Logikschaltung C bewirkt oder zumindest nicht gestört. In Verfahrensschritt 204 erfolgt dann die Auslösung der Personenschutzmittel.

Führte die Überwachung in Verfahrensschritt 202 jedoch zu einem negativen Ergebnis, dann wird in Verfahrensschritt 205 die Übertragung der Auslöseentscheidung aufgehalten, und es kann zusätzlich ein Reset des Rechnerkerns Co oder des Mikrocontrollers Co erfolgen. Auch Sperrungen, wie die der Übertragung von anderen sicherheitskritischen Komponenten, sind hier möglich. Diese werden dann durch den Watchdog WD ausgeführt.

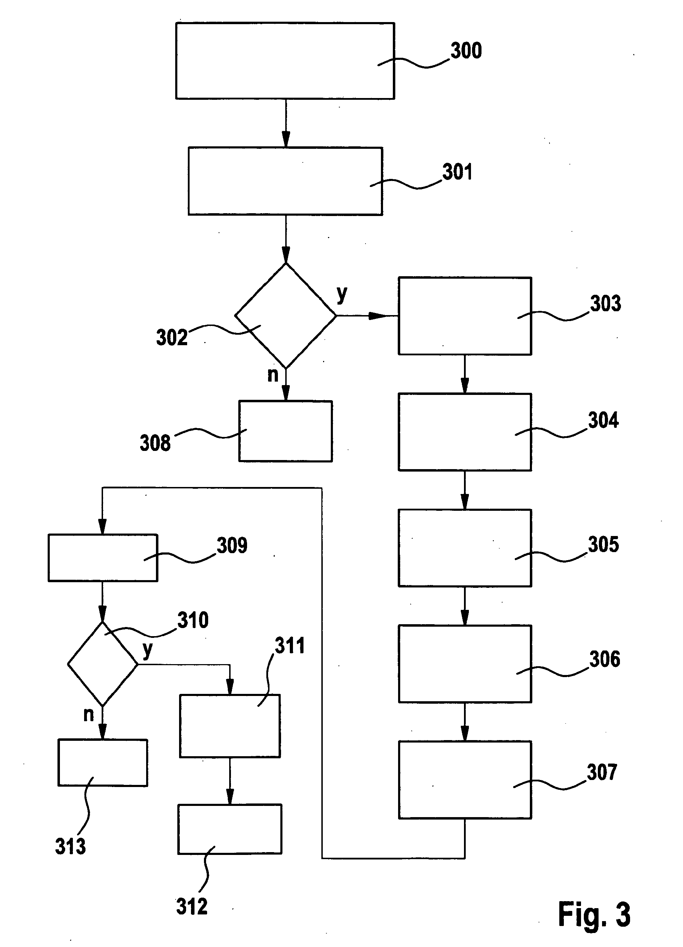

Figur 3 zeigt ein weiteres Flussdiagramm des erfindungsgemäßen Verfahrens. In Verfahrensschritt 300 beginnt der erste Zyklus. In Verfahrensschritt 301 wird die Watchdog-Überprüfung durchgeführt. Führt in Verfahrensschritt 302 diese Überprüfung zu einem positiven Ergebnis, dann werden Sensorwerte in Verfahrensschritt 303 eingelesen. Mit diesen Sensorwerten wird in Verfahrensschritt 304 ein Algorithmus zur Bildung einer Auslöseentscheidung ausgeführt. In Verfahrensschritt 305 wird dann gegebenenfalls die Feuerentscheidung gebildet, die in Verfahrensschritt 306 in den Speicher MibSpi geschrieben wird. In Verfahrensschritt 307 beginnt der zweite Zyklus. Erneut wird in Verfahrensschritt 309 eine Watchdog-Überprüfung durchgeführt.

Wird dann in Verfahrensschritt 310 festgestellt, dass diese Watchdog-Überprüfung zu einem positiven Ergebnis geführt hat, dann wird in Verfahrensschritt 311 die Übertragung der Feuerentscheidung zur Zündkreisendstufe FLIC nicht gestört oder bewirkt. In Verfahrensschritt 312 erfolgt dann die Auslösung der Personenschutzmittel. Wurde jedoch in Verfahrensschritt 302 festgestellt, dass der Rechnerkern Co nicht korrekt funktioniert, wird in Verfahrensschritt 308 ein Reset bzw. Sperrung von Komponenten im Steuergerät vorgenommen. Wurde in Verfahrensschritt 310 festgestellt, dass der Rechnerkern Co nicht korrekt funktioniert, dann wird in Verfahrensschritt 313 eine Übertragung der Auslöseentscheidung zur Zündkreisendstufe gestoppt.

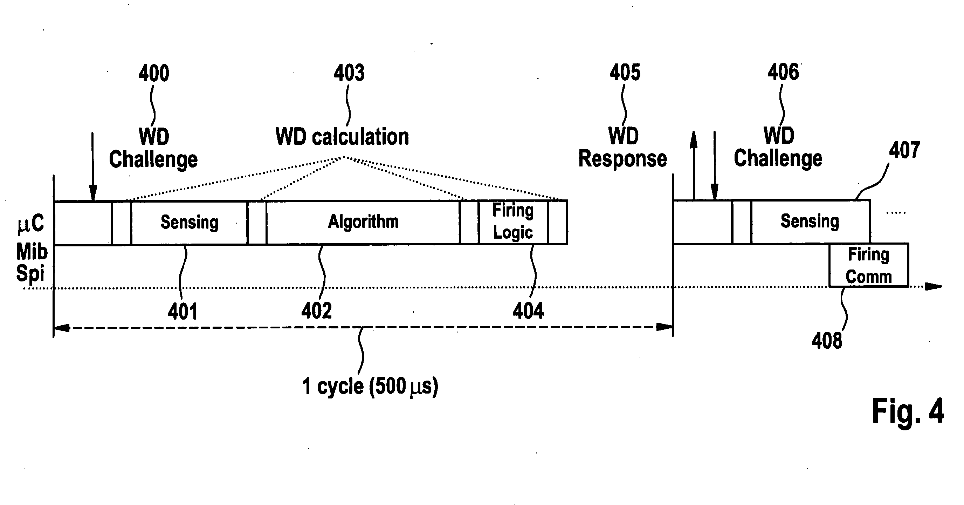

Im Zeitablaufdiagramm gemäß Figur 4 wird eine weitere Ausführungsform des erfindungsgemäßen Verfahrens dargestellt. In der oberen Zeile werden die Aktionen des Mikrocontrollers µC gezeigt, während in der unteren Zeile die Aktion des Speichers MibSpi dargestellt wird. Zu Beginn des Zyklus wird durch den Watchdog eine Frage 400 an den Mikrocontroller gesendet, die dieser dann beantwortet. Dies wird durch 403 dargestellt. Doch zunächst werden die Sensorwerte 401 eingelesen, auf die dann der Algorithmus 402 abläuft. In Verfahrensschritt 404 wird dann die Feuerentscheidung gebildet. Am Ende des Zyklus wird vom Rechnerkern Co die Feuerentscheidung in den Speicher MibSpi geschrieben. Im zweiten Zyklus wird erneut eine Frage gestellt und beantwortet. Danach erfolgt wieder das Einlesen der Sensorwerte in Verfahrensschritt 407. Dann erfolgt die Datenauswertung durch den Rechnerkern Co und in Abhängigkeit von der letzten Watchdog-Abfrage wird entschieden, ob der Feuerbefehl aus dem Speicher MibSpi zu den Zündendstufen übertragen wird beziehungsweise die Zündendstufen gesperrt werden oder nicht.

Der Watchdog WD kann neben dem Rechnerkern Co auch noch weitere Komponenten des Mikrocontrollers testen.

## Patentansprüche

1. System zur Ansteuerung von Personenschutzmitteln mit:
- wenigstens einer Auswerteschaltung (Co) zum Treffen einer Entscheidung zur Ansteuerung,
- einem Speicher (MibSPI), in den die wenigstens eine Auswerteschaltung (Co) die Entscheidung schreibt,
- einer Logikschaltung (C), die eine Übertragung der Entscheidung aus dem Speicher (MibSPI) zu wenigstens einem Zündkreis (FLIC) veranlasst, wobei die Logikschaltung (C) ein Schaltwerk ist, das nach vorgegebenen Zeiten die Entscheidung überträgt,
- wenigstens einem Watchdog (WD) zur Überprüfung der wenigstens einen Auswerteschaltung (Co) nach der Entscheidung zur Ansteuerung, wobei der wenigstens eine Watchdog (WD) der wenigstens einen Auswerteschaltung (Co) eine Frage sendet, um arithmetische Funktionen und Sprungbefehle in der wenigstens einen Auswerteschaltung (Co) zu testen, wobei der wenigstens eine Watchdog (WD) die Überprüfung in Abhängigkeit von einer Antwort auf die Frage durch die wenigstens eine Auswerteschaltung (Co) durchführt, wobei der wenigstens eine Watchdog (WD) bei einer nicht korrekten Funktionsweise die Übertragung der Entscheidung durch ein entsprechendes Signal an die Logikschaltung (C) sperrt.

2. System nach Anspruch 1, **dadurch gekennzeichnet, dass** die Vorrichtung derart konfiguriert ist, dass das System in einem Zyklus arbeitet, wobei zu Beginn eines Zyklus die Überprüfung erfolgt.

3. System nach einem der vorhergehenden Ansprüche, **dadurch gekennzeichnet, dass** der Speicher (MibSPI) als multi-buffered Serial Peripherial Interface ausgebildet ist.

4. System nach Anspruch 1, **dadurch gekennzeichnet, dass** die Auswerteschaltung (Co), der Speicher (MibSPI) und die Logikschaltung (C) Elemente eines Prozessors sind.

5. Verfahren zur Ansteuerung von Personenschutzmitteln mit wenigstens einer Auswerteschaltung (Co), einem Speicher (MibSPI), einer als Schaltwerk ausgeführten Logikschaltung (L), wenigstens einem Watchdog (WD) und wenigstens einem Zündkreis, wobei:
- eine Entscheidung zur Ansteuerung durch wenigstens eine Auswerteschaltung (Co) getroffen wird,
- die Entscheidung durch die wenigstens eine Auswerteschaltung (Co) in den Speicher (MibSPI) geschrieben wird,
- eine Übertragung der Entscheidung aus dem Speicher (MibSPI) zu wenigstens einem Zündkreis (FLIC) durch die als Schaltwerk ausgeführte Logikschaltung (L) veranlasst wird, wobei das Schaltwerk die Entscheidung nach vorgegebenen Zeiten überträgt,
- die wenigstens eine Auswerteschaltung (Co) durch den wenigstens einem Watchdog (WD) nach der Entscheidung zur Ansteuerung überprüft wird, wobei der wenigstens eine Watchdog (WD) der wenigstens einen Auswerteschaltung (Co) eine Frage sendet, um arithmetische Funktionen und Sprungbefehle in der wenigstens einen Auswerteschaltung (Co) zu testen, wobei der wenigstens eine Watchdog (WD) die Überprüfung in Abhängigkeit von einer Antwort auf die Frage durch die wenigstens eine Auswerteschaltung (Co) durchführt, und wobei der wenigstens eine Watchdog (WD) bei einer nicht korrekten Funktionsweise die Übertragung der Entscheidung durch ein entsprechendes Signal an die Logikschaltung (L) sperrt.

## Claims

1. System for actuating personal protection means having:
- at least one evaluation circuit (Co) for making an actuation decision,
- a memory (MibSPI) to which the at least one evaluation circuit (Co) writes the decision,
- a logic circuit (C) which causes the decision to be transmitted from the memory (MibSPI) to at least one firing circuit (FLIC), the logic circuit (C) being a switching mechanism which transmits the decision after predefined times,
- at least one watchdog (WD) for checking the at least one evaluation circuit (Co) after the actuation decision, the at least one watchdog (WD) transmitting a question to the at least one evaluation circuit (Co) in order to test arithmetic functions and jump instructions in the at least one evaluation circuit (Co), the at least one watchdog (WD) carrying out the check on the basis of a response to the question from the at least one evaluation circuit (Co), the at least one watchdog (WD) blocking the transmission of the decision by applying a corresponding signal to the logic circuit (C) in the event of an incorrect method of operation.

2. System according to Claim 1, **characterized in that** the apparatus is configured in such a manner that the system operates in a cycle, the check being carried out at the beginning of a cycle.

3. System according to one of the preceding claims, **characterized in that** the memory (MibSPI) is in the form of a multi-buffered serial peripheral interface.

4. System according to Claim 1, **characterized in that** the evaluation circuit (Co), the memory (MibSPI) and the logic circuit (C) are elements of a processor.

5. Method for actuating personal protection means having at least one evaluation circuit (Co), a memory (MibSPI), a logic circuit (C) in the form of a switching mechanism, at least one watchdog (WD) and at least one firing circuit:
- at least one evaluation circuit (Co) making an actuation decision,
- the at least one evaluation circuit (Co) writing the decision to the memory (MibSPI),
- the logic circuit (C) in the form of a switching mechanism causing the decision to be transmitted from the memory (MibSPI) to at least one firing circuit (FLIC), the switching mechanism transmitting the decision after predefined times,
- the at least one watchdog (WD) checking the at least one evaluation circuit (Co) after the actuation decision, the at least one watchdog (WD) transmitting a question to the at least one evaluation circuit (Co) in order to test arithmetic functions and jump instructions in the at least one evaluation circuit (Co), the at least one watchdog (WD) carrying out the check on the basis of a response to the question from the at least one evaluation circuit (Co), and the at least one watchdog (WD) blocking the transmission of the decision by applying a corresponding signal to the logic circuit (C) in the event of an incorrect method of operation.

## Revendications

1. Système pour commander des moyens de protection de personnes comprenant :
- au moins un circuit d'interprétation (Co) pour prendre une décision de commande,
- une mémoire (MibSPI) dans laquelle ledit au moins un circuit d'interprétation (Co) écrit la décision,
- un circuit logique (C) qui ordonne une transmission de la décision depuis la mémoire (MibSPI) vers au moins un circuit d'amorçage (FLIC), le circuit logique (C) étant un mécanisme de commutation qui transmet la décision après des temps prédéfinis,
- au moins un chien de garde (WD) pour contrôler ledit au moins un circuit d'interprétation (Co) après la décision de commande, ledit au moins un chien de garde (WD) envoyant audit au moins un circuit d'interprétation (Co) une question afin de tester des fonctions arithmétiques et des instructions de saut dans ledit au moins un circuit d'interprétation (Co), ledit au moins un chien de garde (WD) effectuant le contrôle en fonction d'une réponse à la question par ledit au moins un circuit d'interprétation (Co), ledit au moins un chien de garde (WD), en cas de fonctionnement incorrect, bloquant la transmission de la décision par un signal en conséquence au circuit logique (C).

2. Système selon la revendication 1, **caractérisé en ce que** le dispositif est configuré de telle sorte que le système fonctionne dans un cycle, le contrôle ayant lieu au début du cycle.

3. Système selon l'une des revendications précédentes, **caractérisé en ce que** la mémoire (MibSPI) est réalisée sous la forme d'une interface périphérique série à tampons multiples.

4. Système selon la revendication 1, **caractérisé en ce que** le circuit d'interprétation (Co), la mémoire (MibSPI) et le circuit logique (C) sont des éléments d'un processeur.

5. Procédé pour commander des moyens de protection de personnes comprenant au moins un circuit d'interprétation (Co), une mémoire (MibSPI), un circuit logique (C) réalisé sous la forme d'un mécanisme de commutation, au moins un chien de garde (WD) et au moins un circuit d'amorçage, dans lequel :
- une décision de commande est prise par au moins un circuit d'interprétation (Co)
- la décision est écrite dans la mémoire (MibSPI) par ledit au moins un circuit d'interprétation (Co),
- une transmission de la décision depuis la mémoire (MibSPI) vers au moins un circuit d'amorçage (FLIC) est ordonnée par le circuit logique (C) réalisé sous la forme d'un mécanisme de commutation, le mécanisme de commutation transmettant la décision après des temps prédéfinis,
- ledit au moins un circuit d'interprétation (Co) est contrôlé par ledit au moins un chien de garde (WD) après la décision de commande, ledit au moins un chien de garde (WD) envoyant audit au moins un circuit d'interprétation (Co) une question afin de tester des fonctions arithmétiques et des instructions de saut dans ledit au moins un circuit d'interprétation (Co), ledit au moins un chien de garde (WD) effectuant le contrôle en fonction d'une réponse à la question par ledit au moins un circuit d'interprétation (Co), et ledit au moins un chien de garde (WD), en cas de fonctionnement incorrect, bloquant la transmission de la décision par un signal en conséquence au circuit logique (C).
